# EUROPÄISCHE PATENTSCHRIFT

(11) **EP 1 565 533 B1**
(45) Veröffentlichungstag und Bekanntmachung des Hinweises auf die Patenterteilung: **16.07.2008**
(21) Anmeldenummer: 03789069.6
(22) Anmeldetag: 21.11.2003
(51) Int. Cl.: C09C 3/10, C09C 3/00

(54) **LCST-POLYMERE**
LCST POLYMERS
POLYMERES LCST

(30) Priorität: 21.11.2002 DE 10254430
(43) Veröffentlichungstag der Anmeldung: 24.08.2005
(73) Patentinhaber: SÜD-CHEMIE AG, 80333 München (DE)
(72) Erfinder: KRÄMER, Inge, 85354 Freising (DE); SCHAUER, Thadeus, 75382 Althengstett (DE); SCHROD, Matthias, 64859 Eppertshausen (DE); ENTENMANN, Mark, 70734 Fellbach (DE)
(74) Vertreter: Westendorp, Michael Oliver
(86) Internationale Anmeldenummer: PCT/EP2003/013098
(87) Internationale Veröffentlichungsnummer: WO 2004/046258

(56) Entgegenhaltungen:
- EP-A- 0 629 649
- WO-A-01/60926
- WO-A-20/04009127
- US-A- 5 652 316
- US-A- 6 133 047
- US-A1- 2002 098 567
- PATENT ABSTRACTS OF JAPAN Bd. 0186, Nr. 48 (C-1284), 8. Dezember 1994 (1994-12-08) & JP 6 253831 A (HIROSHI TANZAWA), 13. September 1994 (1994-09-13)

## Beschreibung

Die Erfindung betrifft LCST-(lower critical solution temperature)-Polymere. Unter diesem Begriff versteht man Polymere, die bei einer niedrigen Temperatur in einem flüssigen Medium löslich sind, aber oberhalb einer gewissen Temperatur (der LCST-Temperatur) aus dem flüssigen Medium ausfallen. LCST-Polymere haben unterschiedliche chemische Zusammensetzungen. Die bekanntesten LCST-Polymere sind Polyalkylenoxid-Polymere, z.B. Polyethylenoxid-(PEO)- oder Polypropylenoxid-(PPO)-Polymere, aber auch (PEO)-(PPO)-Copolymere, insbesondere PEO-PPO-PEO-Block-Copolymere. Andere LCST-Polymere sind Poly(N-isopropylacrylmid)-Ethyl-(hydroxyethyl)-cellulose-, Poly(N-vinylcaprolactam)- und Polymethylvinylether)-Derivate.

Die zuerst genannten Polymere sind beispielsweise in der WO 01/60926 A1 beschrieben. Diese Druckschrift betrifft ein Verfahren zur Beschichtung von Substratoberflächen (Partikeloberflächen und nicht-partikuläre Substratoberflächen), mit LCST-Polymeren, bei dem ein LCST-Polymer in einem Lösemittel bei einer Temperatur unterhalb der LCST-Temperatur gelöst, diese Lösung mit den zu beschichtenden Substratoberflächen gemischt und die so erhaltene Mischung bis zum Einsetzen der Ablagerung von LCST-Polymeren auf den Substratoberflächen bis über die LCST-Temperatur erhitzt wird. Das abgelagerte LCST-Polymer kann immobilisiert werden, indem es mit funktionellen Gruppen versehen wird, welche eine im wesentlichen irreversible Adsorption an der Substratoberfläche erlauben. Die funktionellen Gruppen können aus Säuregruppen, Hydroxylgruppen, Aminogruppen, Phosphatgruppen, Mercaptangruppen, Siloxangruppen oder hydrophoben Gruppen ausgewählt sein. Ferner können die LCST-Polymeren mit funktionellen Gruppen versehen werden, welche nach der Ablagerung der LCST-Polymeren auf den Partikeln in einer Vernetzungsreaktion die Vernetzung der LCST-Polymeren erlauben. Derartige funktionelle Gruppen können aus Carbonsäuregruppen-Derivaten, Chloroformiat-Gruppen, Aminogruppen, Isocyanatgruppen, Oxirangruppen und/oder radikalisch vernetzbaren Gruppen ausgewählt sein, wobei die Vernetzungsreaktion u.a. durch Änderung des pH-Wertes der Lösung ausgelöst wird.

Die radikalische Vernetzung wird gegenüber der Vernetzung durch Änderung des pH-Wertes weniger bevorzugt. In den Beispielen ist lediglich die Umhüllung von diversen Pigmentpartikeln (TiO₂, Fe₂O₃, Cu-Phthalocyaninblau sowie von Halbleiterwafern mit einer Siliciumdioxidoberfläche) mit PEO-PPO-PEO-Block-Copolymeren angegeben. Eine Fixierung der auf den Substratoberflächen abgeschiedenen Copolymeren ist nicht erläutert.

Die Verwendung von LCST-Polymeren zur Umhüllung von superparamagnetischen Teilchen ist ferner aus der WO 97/45202 bekannt. Diese Teilchen enthalten einen Kern aus einem ersten Polymer, eine innere Schicht aus einem zweiten Polymer, die den Kern überzieht und in welcher ein magnetisches Material dispergiert ist, sowie eine äußere Schicht aus einem dritten Polymer, die die magnetische Schicht überzieht und die in der Lage ist, mit mindestens einem biologischen Molekül zu reagieren, wobei zumindest das zweite Polymer thermoempfindlich ist und eine LCST-Temperatur von 15 bis 65°C hat. Das zweite Polymer wird vorzugsweise durch Polymerisation (1) eines wasserlöslichen Acrylamid-Monomers, wie N-Isopropylacrylamid (NIPAM), (2) mindestens eines Vernetzungsmittels, wie N,N-Methylen-bisacrylamid und (3) mindestens eines funktionellen kationischen und wasserlöslichen Monomers, das sich von dem Monomer (1) unterscheidet, z.B. des Chlorids von 2-Aminoethyl-methacrylat, erhalten. Ein weiteres bevorzugtes Polymer ist [Poly-(N-isopropylacrylamid)] (PNIPAM).

In den "Patent Abstracts of Japan", Vol. 009 Nr. 188 (C295) (1985) Seite 107 = JP 60 058 237 A ist die Einkapselung von anorganischen Teilchen beschrieben. Bezweckt wird die Herstellung einer stabilen Teilchendispersion. Die anorganischen Teilchen werden in Wasser suspendiert und unterhalb der LCST-Temperatur mit einer wässrigen Lösung des LCST-Polymers kontaktiert. Wird die Temperatur des erhaltenen Systems erhöht, so wird auf den anorganischen Teilchen eine Schicht des LCST-Polymers abgeschieden. Der erhaltenen Teilchensuspension wird ein durch Radikalpolymerisation polymerisierbares Monomer, ein Initiator, und gegebenenfalls ein Emulgator zugesetzt, und es wird eine Emulsionspolymerisation durchgeführt, wobei eingekapselte Teilchen erhalten werden. Ferner tritt nun als äußere Schicht die polymerisierte Monomerschicht auf, so dass die Funktion der LCST-Polymerschicht nur darin besteht, das Eindringen von Monomerresten zu erleichtern.

Das polymerisierbare Monomer wird also mit dem bereits auf den Teilchen befindlichen LCST-Polymer umgesetzt bzw. das wasserlösliche Polymer wird mit einer Schicht des aus dem polymerisierbaren Monomer erhaltenen Polymers umhüllt. Dieses Verfahren hat den Nachteil, dass die Anpfropfung nur an den aktiven Zentren des zuvor abgeschiedenen LCST-Polymers stattfindet, wodurch die Umhüllung ungleichmäßig und heterogen ist und keine vollständige Barriere darstellt.

Außerdem muss man der Dispersion der beschichteten Partikel ein Monomer zusetzen, um die Vernetzung zu initiieren. In den meisten Fällen wird das Monomer nie vollständig verbraucht werden, so dass ein gewisser Teil des Monomers in der vernetzten Struktur zurückbleibt. Eine spätere Emission der "gelösten" Monomeren aus dem Polymer ist unerwünscht, da das Monomer gesundheitsschädlich ist.

Weiterhin sind Nachteile im Lacksystem durch die Ablösung des einpolymerisierten Emulgators zu erwarten, wenn das Pigment in Kontakt mit Lösungsmitteln kommt.

In der WO 92/20441 ist ein Verfahren zur Erzeugung von eingekapselten Teilchen beschrieben, wobei die Teilchen einen Kern enthalten, der von einem Koazervat-Überzug umgeben ist. Bei diesem Verfahren wird eine wässrige Lösung eines LCST-Polymers bei einer Temperatur der reversiblen Insolubilisierung (TRI) von T1, mit einer Dispersion der Teilchen bei einer Temperatur von T2, die niedriger als T1 ist, kontaktiert, worauf die Dispersion auf eine Temperatur oberhalb T1 erhitzt wird, wodurch das LCST-Polymer als Koazervat um die Teilchen abgeschieden wird. Dann wird der Lösung ein Mittel zur Herabsetzung der TRI zugesetzt, wodurch die TRI des LCST-Polymers in der Lösung auf eine Temperatur T3, die niedriger als T1 ist, erniedrigt wird, worauf die Dispersion entweder auf eine Temperatur zwischen T3 und T1 abgekühlt und bei dieser Temperatur gehalten wird, oder die Teilchen bei einer Temperatur von mehr als T3 von der Dispersion abgetrennt werden. Als Mittel zur Herabsetzung der TRI können Elektrolyte und mit Wasser mischbare organische Flüssigkeiten verwendet werden, in denen das LCST-Polymer nicht löslich ist.

Als LCST-Polymere werden bevorzugt synthetische Polymere (Homopolymere oder Copolymere) mit hydrophilen Monomeren verwendet. Geeignete LCST-Monomere sind Acryl- oder Vinylverbindungen. Werden LCST-Copolymere verwendet, so ist das Comonomer gewöhnlich hydrophil und kann nicht-ionisch oder ionisch sein. Geeignete nicht-ionische Monomere sind gewisse Aryl- oder Vinylverbindungen. Anionische oder kationische Monomere sind beispielsweise Acrylsäurederivate bzw. Dialkylaminoalkylacrylate. Diese Verbindungen sind aber an den Enden bereits abgesättigt, so dass keine Vernetzungsreaktionen mehr möglich sind.

LCST-Polymere sind beispielsweise auch aus der EP 0 629 649 A1 bekannt. Sie werden als rheofluidisierende Zusätze und Antiabsetzmittel im Schlitzwandbau, für Bohrungen in der Ölindustrie und als hydraulische Flüssigkeiten und Schmiermittel eingesetzt.

Aus der EP 0 718 327 A2 sind universell verträgliche Pigmentdispergatoren bekannt, die aus Methylmethacrylat und einem Acrylat bzw. Methacrylat zusammengesetzt sind. Diese Polymeren dienen jedoch nur zur Dispersion von Pigmenten, nicht aber zur Umhüllung von Pigmenten.

In der EP 0 629 649 A1 werden Polymere beschrieben, welche LCST-Eigenschaften aufweisen. Diese Polymere umfassen als Hauptkette ein wasserlösliches Polymer, welches keine LCST-Eigenschaften aufweist. Die Polymere umfassen ferner Kettenabschnitte, welche innerhalb des gewünschten Temperaturbereichs LCST-Eigenschaften aufweisen. Die beiden Anteile des Polymers werden in der Weise ausgewählt, dass das Verhältnis A/B möglichst hoch ist, wobei A die Viskosität bei einer Scherrate im Bereich von etwa 10⁻¹ bis 10² s⁻¹ bedeutet und B für die Viskosität bei einer Scherrate im Bereich von etwa 10 bis etwa 20² s⁻¹ steht. Die Polymere werden für die Stabilisierung von Suspensionen eingesetzt.

In der US 5,652,316 werden Copolymere beschrieben, welche als Dispersionsmittel für Farbstoffe sowie Pigmente in Standardkunststoffen verwendet werden können. Die Polymere werden durch Polymerisation von (Meth-)Acrylaten hergestellt. Die Polymere wirken als Vermittler zwischen den sehr unpolaren Standardkunststoffen und den Pigmenten. Die Polymere weisen daher unpolare Eigenschaften auf. Die Polymere stellen keine LCST-Polymere da.

In der US 6,133,047 werden superparamagnetische Partikel beschrieben, welche einen Kern aus einem ersten Polymer, eine innere Schicht aus einem zweiten Polymer, welche den Kern umgibt und in welcher ein magnetisches Material verteilt ist, sowie eine äußere Schicht aus einem dritten Polymer umfassen, welche die magnetische Schicht umgibt und welche mit zumindest einem biologischen Molekül wechselwirken kann. Zumindest das zweite Polymer ist wärmeempfindlich und weist eine bestimmte LCST im Bereich von 15 bis 65°C auf.

In der WO01/60926 A1 wird ein Verfahren zur Beschichtung von Partikeln mit LCST-Polymeren vorgeschlagen, wobei in einem ersten Schritt ein LCST-Polymer in einem Lösungsmittel bei einer Temperatur unterhalb der LCST gelöst wird. Die Lösung wird dann mit den zu beschichtenden Partikeln vermischt und in einem weiteren Schritt die Temperatur der erhaltenen Mischung bis zum Einsetzen der Ablagerung von LCST-Polymeren auf den Partikeloberflächen oder darüber hinaus erhöht. Besonders bevorzugt werden nach der Ausbildung der Beschichtung oder bei Ausbildung der Beschichtung die LCST-Polymere auf der Oberfläche der damit zu beschichtenden Substrate immobilisiert. Dazu werden verschiedene Verfahren vorgeschlagen, die eine Vernetzung oder Verankerung der Beschichtung auf der Substratoberfläche zur Folge haben. Diese Vernetzung oder Verankerung kann durch geeignete Modifizierungen des Polymers und/oder des Substrats zu Stande kommen, wodurch es zur Ausbildung von chemischen Bindungen zwischen den einzelnen Polymerketten (Vernetzung) und/oder zwischen Substrat und LCST-Polymer kommt. Als Beispiele für eine geeignete Modifizierung der LCST-Polymere wird die Einführung einer radikalisch vernetzbaren Gruppe bzw. von Säurechlorid- oder Chloroformiat-Gruppen angeführt, wodurch eine Reaktion mit OH- oder-NH-Gruppen im Polymer (Vernetzung) bzw. mit OH- oder NH-Gruppen an der Substratoberfläche (Verankerung) möglich wird.

Der Erfindung lag die Aufgabe zugrunde, LCST-Polymere bereitzustellen, die sich beim Abkühlen nicht mehr von einer Substratoberfläche ablösen, sondern damit fest verbunden bleiben. Die Polymeren sollen also ohne Zusätze von Emulgatoren oder Monomeren verwendet werden, so dass aus der definierten Polymerschicht keine Zusatzstoffe herausgelöst werden können.

Diese Aufgabe wird erfindungsgemäß gelöst durch LCST-Polymere der allgemeinen Formel: 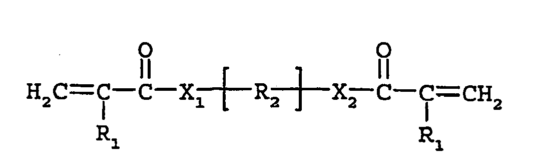 worin R₁ (gleich oder voneinander verschieden) Wasserstoff oder eine Methylgruppe, X₁ und X₂ (gleich oder voneinander verschieden) = -O-, -S- oder -NH- und X₁ zusätzlich eine Einfachbindung bedeuten, wenn das erste Atom in R₂ kein C-Atom ist, und R₂ einen der nachstehend angegebenen Reste bedeutet:
a) einen Copolymerrest (Cop), enthaltend mindestens zwei Struktureinheiten -(-O-C₂H₄)ₙ- (Ethylenoxid = EO) und -(-O-C₃H₆-)ₙ- (Propylenoxid = PO) oder -(-O-C₄H₈)ₙ- (Butylenoxid = BuO) und -(-O-CH₂-)ₙ- (Methylenoxid = MeO) im Molverhältnis 5 bis 95:95 bis 5, worin n (für jede Struktureinheit gleich oder voneinander verschieden) etwa 1 bis 1000 bedeutet;
b) 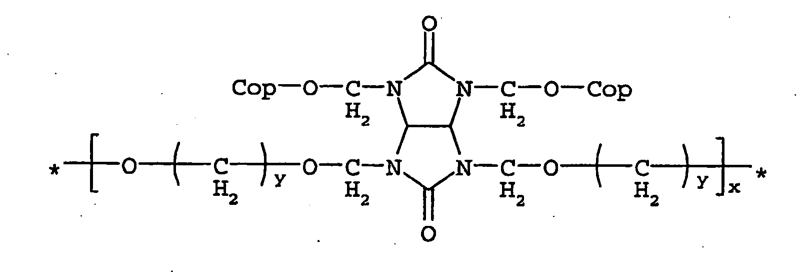 worin Cop einen Copolymerrest, wie in (a) definiert, x = 1 bis 5 und y = 1 bis 20 bedeuten;
c) 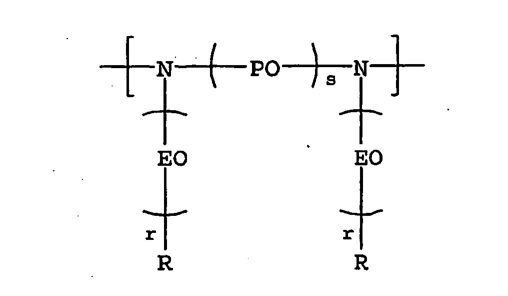 worin R eine Alkylgruppe, r = (gleich oder voneinander verschieden) 1 bis 1000 und s = 1 bis 500 bedeuten;
d) 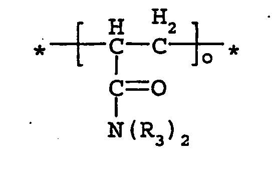 worin o = 10 bis 4000 und R₃ (gleich oder voneinander verschieden), Wasserstoff oder Alkylgruppen mit 1 bis 5 Kohlenstoffatomen bedeuten;
e) 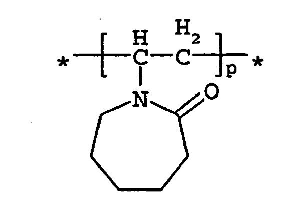 worin p = 5 bis 2000 bedeutet;
f) 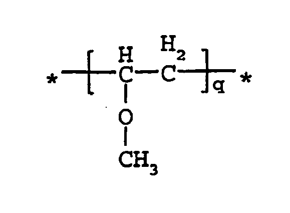 worin q = 10 bis 4000 bedeutet.

Es wurde überraschenderweise gefunden, dass die erfindungsgemä-βen Polymeren nach der Polymerisation an der Acryl- bzw. Methacryl-Seitenkette irreversibel an der Substratoberfläche immobilisiert werden. Die Immobilisierung ist weit größer als die von LCST-Polymeren, bei denen die Endgruppen beispielsweise aus einfachen Vinylgruppen oder anderen Gruppen mit Doppelbindungen bestehen.

Andere polymerisierbare Einheiten, wie Vinylessigsäure, Ölsäure, Fumarsäure, Maleinsäure, Polyethylenglykolmonovinylether sind als Endgruppen weniger geeignet.

Die erfindungsgemäßen Polymeren haben gewöhnlich eine LCST im Bereich von 0 bis 70°C, die u.a. von folgenden Faktoren abhängt:
- Molverhältnis der hydrophoben und hydrophilen Anteile des LCST-Polymeren,
- Molmasse des LCST-Polymeren,
- Anzahl der polymerisierbaren und ionisierbaren Gruppen,
- Konzentration des Polymeren,
- pH-Wert und Ionenstärke des Mediums.

Die LCST-Polymere bestehen aus polaren und unpolaren bzw. hydrophilen und hydrophoben Segmenten. Die LCST kann durch Variation dieser einzelnen Segmente sowie der Gesamtkettenlänge gezielt eingestellt werden.

Die erfindungsgemäßen LCST-Polymere lassen sich nach der Polymerisation der Acryl- bzw. Methacryl-Endgruppen als auf den Substratoberflächen fixierte Dispergiermittel einsetzen. Auf diese Weise verbilligt sich u.a. der kostenintensive Schritt der Pigmentdispergierung, da das Pigment sein Dispergiermittel mit sich trägt. Ferner bilden die so beschichteten Pigmente in einem geringeren Umfang Agglomerate als unbehandelte Pigmente, so dass die Dispergierung leichter durchzuführen ist, was zu einer zusätzlichen Kostenreduzierung führt.

Dispergiermittel sind grenzflächenaktive Substanzen, die das Dispergieren eines pulverförmigen Stoffes; z.B. eines Pigments oder eines Füllstoffes, in einem flüssigen Dispergiermedium erleichtern, indem sie die Grenzflächenspannung zwischen beiden Komponenten erniedrigen. Dadurch erleichtern sie beim Pigmentanreiben das mechanische Aufbrechen der in Form von Agglomeraten vorliegenden Sekundärteilchen in Primärteilchen. Weiterhin schützen sie die gebildeten Primärteilchen durch vollständige Benetzung und Ausbildung einer Schutzkolloid-Hülle oder einer elektrochemischen Doppelschicht gegen Reagglomeration oder Flokkulation.

Da die erfindungsgemäßen LCST-Polymeren im sichtbaren Licht durchsichtig oder durchscheinend sind, können sie eine vollständige Umhüllung von Partikeln bilden, ohne dass dabei die Farbe der Partikel selber beeinflusst wird. Ferner zeigen so beschichtete Pigmente in Lacken die volle Farbstärke, da sie aufgrund der Beschichtung mit LCST-Polymer keine Agglomerate bilden.

Bevorzugte LCST-Polymere fallen unter die Gruppen (a) und (c).

Vorzugsweise bedeuten der Rest -(C₃H₆)- Rest in (a) und (c) einen Isopropylrest und der Rest -(C₄H₈)- in (a) einen Isobutylrest.

Die bevorzugten LCST-Polymeren in der Gruppe (a) sind Block-Copolymere, wobei die Struktureinheiten -(EO)- und -(PO)- einerseits und die Struktureinheiten -(BuO)- und -(MeO)- andererseits in Blöcken mit n = 3 bis 100 vorliegen.

Block-Copolymere bestehen aus Blöcken von Homosequenzen, die über die Enden miteinander verknüpft sind. Pfropfpolymere bestehen aus einem sogenannten homopolymeren Rückgrat, von welchem Polymerketten anderer Homopolymeren ausgehen.

Die Blöcke mit den Struktureinheiten -(-PO-)- bzw. -(-BuO-)-sind vorzugsweise zwischen den Blöcken mit den Struktureinheiten -(-EO-)- bzw. -(-MeO-) angeordnet.

Diese Block-Copolymere werden der Einfachheit halber als PEO-PPO-PEO-Block-Copolymere bezeichnet. Ein Dreiblock-Copolymer mit der Blocksequenz PEO-PPO-PEO weist üblicherweise einen PEO-Gewichtsanteil von etwa 5 bis 85 Gew.-% und zahlenmittlere Molmassen (M_{N}) von 200 bis 50.000 g/mol auf.

Die unterschiedlichen Struktureinheiten können aber auch in statistischer Verteilung vorliegen.

Vorzugsweise beträgt das Molverhältnis zwischen den -(EO)-Struktureinheiten und -(PO)-Struktureinheiten etwa 10 bis 60 : 40 bis 90.

Die erfindungsgemäßen LCST-Polymeren der Varianten (a) bis (f) können dadurch hergestellt werden, dass man eine Verbindung der allgemeinen Formel HO-[R₂]-OH, worin R₂ die vorstehend angegebene Bedeutung hat, mit einer Verbindung der Formel
(a) 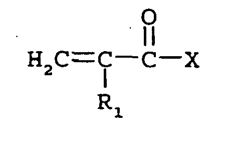 worin R₁ die vorstehend angegebene Bedeutung hat und X OH, Halogen, vorzugsweise Chlor, oder eine niedere Alkoxygruppe bedeutet, im Molverhältnis 1:2 oder (b) mit dem Anhydrid der entsprechenden Säure im Molverhältnis 1:1 umsetzt.

Die Ausgangspolymere für die LCST-Polymere der Produktvarianten (a) bis (c) sind teilweise im Handel erhältlich. Sie können aber auch wie folgt hergestellt werden:

### Für Variante (a):

Die Copolymere können dadurch hergestellt werden, dass man auf einer bereits makromolekular vorliegenden Verbindung die Polymerisation unter Einsatz eines anders gearteten Polymers fortsetzt. Die Polymerisation kann entweder in Lösung in Wasser oder in einem organischem Lösungsmittel, in Emulsion oder Suspension oder durch direkte Umsetzung der Komponenten in der Masse oder in Pulverform in der Schmelze, mit oder ohne Katalysator, vorzugsweise in einem Einstufenverfahren, erfolgen.

### Für Variante (b):

Diese Copolymere sind sternförmig und enthalten als zentrale Verknüpfungseinheit eine Glykolurilgruppe. Sie können wie folgt hergestellt werden:

Eine Glykourileinheit (Powderlink 1774) wird mit PEO-Methylether und PPO-Butylether umgesetzt, um so eine oder mehrere PEO-Einheiten mit einer oder mehreren PPO-Einheiten zu verknüpfen.

Derartige Verbindungen und ihre Verwendung zur Beschichtung von Substratoberflächen, wie Pigmenten, sind beispielsweise in den folgenden Druckschriften beschrieben: DE 100 38 147 A1, DE 100 64 240.3 und DE 101 63 985.6.

### Für Variante (c):

Die Herstellung der Copolymeren erfolgt mit Hilfe von Tosylaten. Dadurch ist es möglich, die OH-terminierten Polyether (PEO/PPO) mit Aminen zu verknüpfen. Die Polyether werden dabei mit Tosylchlorid (p-Toluolsulfonsäurechlorid) umgesetzt, wobei man Polyether-Tosylate erhält. Da die Tosylgruppe eine sehr gute Abgangsgruppe ist, kann man die Polyether-Tosylate mit primären Aminen umsetzen. Somit hat man die Möglichkeit, über ein aliphatisches oder aromatisches Diamin z.B. eine PEO-Einheit mit einer PPO-Einheit zu verknüpfen. Eine weitere Möglichkeit ist die Umsetzung von PPO-Diamin mit PEO-Tosylat. Man erhält auf diese Weise ein Drei-Block-Copolymer. Um Vorverlängerungen zu vermeiden, woraus undefinierte Produkte resultieren würden, sollen die Polyether nur eine freie OH-Gruppe enthalten.

Für die Varianten (d) bis (f) werden die entsprechenden Monomeren verwendet.

Die erfindungsgemäßen LCST-Polymeren können zur Beschichtung von Partikeln und nicht-partikulären Substratoberflächen verwendet werden. Zu den erfindungsgemäß geeigneten Partikeln gehören Pigmente, Füllstoffe und Nanopartikel. Pigmente sind pulver- oder plättchenförmige Farbmittel, die im Gegensatz zu Farbstoffen im umgebenden Medium unlöslich sind (DIN 55943: 1993-11, DIN:EN 971-1: 1996-09). Pigmente beeinflussen oder bestimmen die Farbgebung und werden aus Kostengründen in möglichst geringen Mengen eingesetzt. Aufgrund von Wechselwirkungskräften können die Pigmentteilchen, insbesondere beim Einarbeiten in das Matrixmate-' rial agglomerieren. Daraus resultieren z.B. im entstehenden Lack Qualitätseinbußen durch u.a. mangelnde Farbstärke, Bodensatzbildung oder Phasenseparierung.

Bevorzugte Pigmente sind Titandioxid, Eisenoxid, Zinkoxid, Ruß, Cu-Phthalocyanin-Pigmente, plättchenförmige Pigmente, wie Glimmer (gegebenenfalls mit oxidischen und metallischen Überzügen) oder Aluminium. Als Füllstoffe können z.B. Bariumsulfat und Talkum verwendet werden. Als Nanopartikel können Eisenoxid-, Titandioxid- und Siliciumdioxidpartikel verwendet werden. Zu den Partikeln zählen auch Mikrofasern, wie Glas-, Kohle-, Textil- und Polymerfasern.

Die Substratoberflächen können auch nicht-partikuläre Oberflächen sein, z.B. aus Glas, Metall und Halbleitern. Besonders bevorzugte Oberflächen sind Siliciumdioxid-Wafer, die in der Halbleitertechnik Verwendung finden.

Die erfindungsgemäßen LCST-Polymeren werden vorzugsweise in einem flüssigen Medium (z.B. in einem wässrigen oder organischen Medium) unterhalb der LCST-Temperatur mit den Partikeln bzw. den nicht-partikulären Substratoberflächen kontaktiert, worauf die Temperatur bis über die LCST-Temperatur erhöht wird und die Polymeren über die Doppelbindungen bei dieser oder einer höheren Temperatur auf der Oberfläche der Partikel bzw. auf den nichtpartikulären Substratoberflächen polymerisiert werden.

Die Synthese der Produktvariante (a) erfolgt dadurch, dass im Handel erhältliche PEO-PPO-PEO-Blockpolymere, die endständige OH-Gruppen aufweisen, mit Acryl- oder Methacrylsäurederivaten umgesetzt werden, wodurch polymerisierbare Doppelbindungen eingeführt werden. Die Einführung kann mittels folgender Derivate erfolgen: Chloride, Ester, Anhydride, Amide oder freie Säuren und wird sauer oder basisch katalysiert. Diese Um- oder Veresterung kann in einem Lösungsmittel bei etwa 0 bis 100°C, aber auch in Substanz durchgeführt werden. Zur Inhibierung der ungewollten Polymerisation setzt man dem Reaktionsgemisch geringe Mengen eines Polymerisationsinhibitors zu.

Die Synthese der Produktvariante (b) erfolgt dadurch, dass das mit Polyethern modifizierte Glykoluril mit Acryl- oder Methacrylsäurechlorid umgesetzt wird, wodurch polymerisierbare Doppelbindungen eingeführt werden. Diese Reaktion kann in einem Lösemittel bei etwa 0 bis 30°C, aber auch in Substanz durchgeführt werden. Eine Möglichkeit zur Einführung einer Doppelbindung besteht darin, dass das Produktgemisch, welches mindestens zwei PEO/PPO-Segmente enthalten sollte, mit Ethylenglykol umgesetzt wird. Dabei ist die zweite freie OH-Gruppe des Ethylenglykols nach der Reaktion der ersten OH-Gruppe mit der Glykoluril-Einheit durch die Polymerketten sterisch abgeschirmt, so dass es nicht zu einer Umsetzung mit der zweiten Glykoluril-Einheit kommen sollte. Die verbleibende freie OH-Gruppe kann dann mit sterisch weniger anspruchsvollen Verbindungen, wie z.B. mit Acrylsäurechlorid, umgesetzt werden.

Die Synthese der Produktvariante (c) erfolgt dadurch, dass das nach der Tosylat-Methode erhaltene 3-Block-Copolymer an der NH-Gruppe mit Acryl- bzw. Methacrylchlorid umgesetzt werden, wobei man Polymere mit polymerisierbaren Acryl- bzw. Methacryl-Doppelbindungen erhält.

Über diesen Syntheseweg ist es gelungen, ein PPO-Diamin (2000 g/mol) mit PEO (750 g/mol) zu verknüpfen und mit Acrylsäurechlorid Doppelbindungen einzuführen. Bei der Umsetzung von PEO-Tosylat mit PPO-Diamin betragen die Temperaturen etwa 150°C. Die genauen Synthesevorschriften sind in Beispiel 5 angegeben.

Die Synthese der Produktvariante (d) bis (f) erfolgt durch eine anionische Polymerisation der entsprechenden Monomeren in Lösung. Dabei dient eine Natrium-Naphthalinlösung als Initiator. Durch die Verwendung dieses Initiatorsystems bilden sich durch Elektronenübertragung auf einen Teil der Monomeren sogenannte Radikalanionen. Die gebildeten Radikalanionen kombinieren sehr schnell zu Dianionen, wodurch das Kettenwachstum nach zwei Seiten erfolgen wird.

Ein Vorteil dieses Polymerisationsverfahrens ist, dass man eine sehr eng verteilte Molmassenverteilung des Polymeren erhält. Diese kann durch Wahl und Zusammensetzung der Edukte beeinflusst und vorausgesagt werden.

Der Abbruch der Polymerisation erfolgt mit elektrophilen Substanzen. Das-Versetzten der Reaktionslösung mit Acrylsäurechlorid bzw. Methacrylsäurechlorid führt nicht nur dazu, dass die Polymerisation beendet wird, sondern es wird gleichzeitig die acrylische bzw. methacrylische Endgruppe eingeführt.

Gegenstand der Erfindung sind ferner Partikel bzw. nicht-partikuläre Substratoberflächen, die mit dem polymerisierten LCST-Polymer beschichtet sind.

Die Erfindung ist durch die nachstehenden Beispiele in nicht einschränkender Weise erläutert.

### Beispiel 1

### (Variante (a))

### Modifizierung von marktüblichen LCST-Polymeren für die Immobilisierung

Grundsätzlich ist es möglich, LCST-Polymere, die OH- oder NH₂-Gruppen enthalten, mit Acrylsäurechlorid umzusetzen. Die daraus resultierenden modifizierten LCST-Polymere enthalten Doppelbindungen, über die sie radikalisch polymerisiert werden können.

Das vorliegende Beispiel erläutert die Modifizierung von HOPEOPPOPEOOH-Copolymeren.

20 g eines PEO-PPO-PEO-Blockcopolymers (4400 g/mol, 2 OH-Endgruppen; Handelsprodukt Synperonic^{®} L121) wird in einem Zweihals-Rundkolben eingewogen und mit 3 ml Triethylamin (1,2-facher Überschuss) mit Hilfe eines Rührers vermischt. Das Gemisch wird auf etwa 10°C temperiert (Wasserbad). Unter Verwendung eines Tropftrichters werden 2 ml (1,2-facher Überschuss) Acrylsäurechlorid langsam unter starkem Rühren und Kühlen zugetropft, wobei die Temperatur nicht über 25 bis 30°C ansteigen sollte. Die entstehenden Dämpfe (HCl, etwas Acrylamid) werden in das Abluftsystem abgeleitet. Nach der Zugabe des Acrylsäurechlorids wird noch solange unter Kühlung nachgerührt, bis die Wärme- und Dampfentwicklung beendet ist (etwa 30 min). Zur vollständigen Umsetzung des Acrylchlorids wird nun noch 2 h unter Rühren bei 30°C nacherhitzt, auf Raumtemperatur abgekühlt, 3 mal mit Wasser bei Raumtemperatur gespült und abzentrifugiert.

Das resultierende Produkt mit einer LCST-Temperatur von 8°C kann normalerweise in feuchtem Zustand eingesetzt werden, d.h. im Normalfall ist keine weitere Aufarbeitung nötig. Der Gehalt an Polymer wird als Feststoffgehalt bestimmt, und das LCST-Polymer wird bei der Anwendung mit einer relativen Konzentration von 5 bis 10 Gew.-%, bezogen auf Feststoffgehalt, verwendet.

Eine Trocknung des Polymers kann im Ölpumpenvakuum bei maximal 35 bis 40°C vorgenommen werden, um eine Vernetzung zu vermeiden. Zur vollständigen Trocknung hat es sich bewährt, das Polymer nochmals mit Ethanol aufzunehmen und danach den Ethanol abzuziehen. Die Aufarbeitung kann auch auf den bei der Umsetzung von PEONHPPONHPEO beschriebenen Weise durchgeführt werden. Dabei wird das Polymer in Chloroform gelöst. Die Lösung wird mit jeweils wenig verdünnter HCl-, verdünnter NaÖH- und gesättigter NaCl-Lösung ausgeschüttelt. Die organische Phase wird über Natriumsulfat getrocknet, und das Chloroform wird am Rotationsverdampfer (Wasserbad < 25°C) entfernt.

### Beispiel 2

### (Variante (a))

Die Umsetzung des Block-Copolymers von Beispiel 1 kann auch nach dem Stand der Technik durch Umesterung erfolgen. Dazu werden 1 mol des Polymers mit bis zu 4 mol, bevorzugt 2,4 mol Methacrylat, bzw. Methylacrylat gemischt. Die Zugabe des Esters kann auch portionsweise oder kontinuierlich während der Reaktion erfolgen. Weiterhin wird die Mischung mit 0,1 bis 5 Gew.-% Umesterungskatalysator (Schwefelsäure, Salzsäure, p-Toluolsulfonsäure, Dodecylbenzolsulfonsäure, (Erd)alkali(hydr)oxide oder Metallalkoholate) versetzt. Die Umesterung wird bei Sumpftemperaturen von 80 bis 120°C durchgeführt. Zur Vermeidung von ungewollten Polymerisationen wird die Umsetzung zweckmäßigerweise in Gegenwart von geringen Mengen handelsüblicher Polymerisationsinhibitoren (z.B. Hydrochinonmonoalkylether, 2,6 Di-t-butylphenol, N-Nitrosamine, Phenothiazin oder Phosphorsäureester) durchgeführt. Diese Verbindungen werden in Mengen von 0,01 bis 2,0%, bezogen auf die Masse des Acrylsäureesters, eingesetzt. Das erhaltene Produkt hat eine LCST von 8°C.

### Beispiel 3

### (Variante (a))

Die Arbeitsweise von Beispiel 2 wird mit der Abweichung wiederholt, dass 1 mol des Block-Copolymers mit 2,4 mol Acrylsäure umgesetzt wird. Die Veresterung wird in Gegenwart eines Lösungsmittels durchgeführt, mit dem das Wasser azeotrop entfernt werden kann, wie n-Hexan, n-Heptan und Cyclohexan, oder Aromaten, wie Benzol, Toluol und die Xylol-Isomeren und sogenannte Spezialbenzine, welche Siedegrenzen zwischen 70 und 140°C aufweisen. Das erhaltene Produkt hat eine LCST von 8°C.

### Beispiel 4

### (Variante (b))

Die Glykoluril-LCST-Polymeren können sowohl in Lösung als auch in Masse synthetisiert werden. In beiden Fällen erhält man die gleichen Produkte.

### Synthese in Lösung:

In einem Reaktionsgefäß werden 105 g PEO/PPO-Blockcopolymer mit einem Molekulargewicht von etwa 2000 g/Mol; Hersteller Sigma-Aldrich Chemie GmbH, Deisenhofen; 3 g Glykoluril Powderlink^{®} 1174, Hersteller Firma Cytec Industries B.V., Neus; und 400 ml Toluol vorgelegt, unter Stickstoff auf 135°C erwärmt und Feuchtigkeitsspuren durch azeotrope Destillation entfernt. Nach einer Stunde wird die Reaktion durch Zugabe von 0,2 g p-Toluolsulfonsäure unter 530 mbar Vakuum und kontinuierlichem Zutropfen von frischem Toluol gestartet. Nach etwa fünf Stunden werden 1,45 g Ethylenglykol zugegeben. Das Reaktionsgemisch lässt man unter unveränderten Bedingungen weitere fünf Stunden reagieren.

Nach dem Abkühlen werden 2,8 g Triethylamin zugegeben und 2,5 g Acrylsäurechlorid unter Kühlung auf 25-30°C zugetropft. Die Reaktionslösung wird in Schalen gegossen und im Vakuumtrockenschrank bei max. 50°C bis zur Massekonstanz getrocknet. Das erhaltene Produkt hat eine LCST von 8°C.

### Vergleichsbeispiel

Die Arbeitsweise von Beispiel 4 (Glykolurilvariante) wurde mit der Abweichung wiederholt, dass der letzte Reaktionsschritt; nämlich das einführen der polymerisierbaren Doppelbindung in das Polymere, nicht mit Acrylsäurechlorid sonder mit 4-Pentensäurechlorid (Hersteller Sigma-Aldrich Chemie, Deisenhofen) durchgeführt wurde. Dabei wurden 3,26 g für die Reaktion in Lösung und 3,26 g 4-Pentensäurechlorid für die Reaktion in Masse verwendet; die anderen Eduktanteile wurden nicht verändert. Das erhaltene Produkt hat eine LCST von 0 bis 2°C.

### Beispiel 5

### (Variante (c))

### a) Synthese von PEO-Tosylat

25g (33,3 mmol) PEO-Monomethylether (750 g/mol) und 3,54 g (35 mmol) Triethylamin werden in Chloroform gelöst und auf etwa 0 bis 5°C abgekühlt. 6,67 g (35 mmol) Tosylchlorid (in Chloroform gelöst) werden zugetropft, und die Lösung wird etwa 15 h bei Raumtemperatur gerührt. Die Lösung wird mit jeweils wenig verdünnter HCl- und gesättigter NaCl-Lösung ausgeschüttelt. Die organische Phase wird über Natriumsulfat getrocknet, und das Chloroform wird am Rotationsverdampfer entfernt.

### b) Umsetzung von PEO-Tosylat (a) mit PPO-Diamin zum PEONHPPONHPEO-Copolymer

In einen Rundkolben werden das PEO-Tosylat (4,5 g/5 mmol), das PPO-Diamin (2000 g/mol; 5 g/2,5 mmol) sowie 2 ml Triethylamin (Überschuss, da Siedepunkt 89°C) eingewogen. Unter Rückfluss erhitzt man unter kräftigem Rühren 3 h auf 150°C. Das Produkt wird in Chloroform gelöst und mit jeweils wenig Wasser, verdünnter HCl-, verdünnter NaOH- und gesättigter NaCl-Lösung ausgeschüttelt. Die organische Phase wird über Natriumsulfat getrocknet, und das Chloroform (sowie restliches Triethylamin) wird am Rotationsverdampfer entfernt.

### c) Umsetzung des PEONHPPONHPEO-Copolymers (b) mit Acrylsäurechlorid

3 g (0.86 mmol) PEONHPPONHPEO-Copolymer sowie 0,15 g (1,71 mmol) Acrylsäurechlorid werden in Chloroform gelöst und auf etwa 10 bis 15°C abgekühlt. 0,17 g (1,71 mmol) Triethylamin werden zugetropft, und die Lösung wird etwa 15 h bei Raumtemperatur gerührt. Die Lösung wird mit jeweils wenig verdünnter HCl-, verdünnter NaOH- und gesättigter NaCl-Lösung ausgeschüttelt. Die organische Phase wird über Natriumsulfat getrocknet, und das Chloroform wird am Rotationsverdampfer (Wasserbad bei 25°C) entfernt.

Die synthetisierten Produkte wurden mit Hilfe der ¹H-NMR-Sprektroskopie und der GPC analytisch untersucht, wobei die Protonen der CH=CH₂-Gruppe zwischen 5,5 und 6,5 ppm deutlich zu erkennen waren. Die GPC-Elutionsdiagramme zeigten die höhere Molmasse der Produkte im Vergleich zu den Edukten. Die Produkte enthielten aber noch einen Eduktanteil mit niedrigerer Molmasse. Die LCST-Temperatur einer 0,5%-igen wässrigen Lösung beträgt 1 bis 2°C; bei höherem Polymerkonzentrationen ist auch bei 0°C eine leichte Trübung zu erkennen.

### Beispiel 6

### (Variante (d))

### Synthese von N,N-Diethylacrylamid-LCST-Polymeren

### a) Darstellung der Initiatorlösung

In einem 2-1-Dreihalskolben mit Rückflusskühler, dem ein Trockenröhrchen aufgesetzt ist, und Stickstoffzuleitung werden 1000 ml mehrmals über Natrium destilliertes Tetrahydrofuran, 40 g Naphthalin und 6 g Natriumschnitzel bei 20°C unter einer absolut trockenen Stickstoffatmosphäre gerührt. Das Natrium geht im Verlaufe von 2 h unter Bildung der tiefgrün gefärbten Additionsverbindung in Lösung. Die dargestellte Lösung ist hiernach 0,25 molar, bezogen auf Natrium.

### b) Ausführung der Polymerisation

Die nachfolgenden Operationen müssen ebenfalls unter sorgfältigem Ausschluss von Luft und Feuchtigkeit durchgeführt werden.

In einem 1-Liter-Dreihalskolben bringt man unter einer Reinstickstoffatmosphäre 300 ml frisch über Natrium destilliertes Tetrahydrofuran. Dann überführt man 20 ml der Naphthalinnatriumlösung aus a) in einen dem Kolben aufgesetzten Tropftrichter und entfernt durch einige Tropfen dieser Lösung die letzten Verunreinigungen im Kolben. Sobald die grüne Farbe erhalten bleibt, lässt man 500 ml dieser 0,25-m-Lösung zulaufen. Unter starkem Rühren tropft man anschließend im Verlauf von 30 min eine Lösung von 317 g N,N-Diethylacrylamid (2,5 mol) in 1000 ml Tetrahydrofuran zu. Die Lösung verfärbt sich sofort. Durch Außenkühlung hält man die Temperatur auf 15-20°C, wobei das zugetropfte N,N-Diethylacrylamid praktisch in wenigen Sekunden polymerisiert. Nach beendeter N,N-Diethylacrylamidzugabe wird die Polymerisation durch Zugabe eines Überschusses von 12 g Acrylsäurechlorid abgebrochen. Zur Aufarbeitung wird das Reaktionsgemisch mit. 10 ml Methanol versetzt, ehe das Lösemittel abgezogen wird. Das erhaltene Produkt hat eine mittlere Molmasse von etwa 4700 g/mol sowie eine LCST von etwa 39°C.

### Beispiel 7

### (Variante (e))

### Synthese von N-Vinylcaprolactam-LCST-Polmeren

Die Polymerisation von 348 g (2,5 mol) N-Vinylcaprolactam erfolgt analog zu der des N,N-Diethylacrylamids. Das erhaltene Produkt hat eine mittlere Molmasse von etwa 5700 g/mol sowie eine LCST von etwa 32°C.

### Beispiel 8

### (Variante (f))

### Synthese von Methylvinylether-LCST-Polymeren

Die Polymerisation von 145 g (2,5 mol) Methylvinylether erfolgt analog zu der des N,N-Diethylacrylamids. Das erhaltene klebrige Produkt hat eine mittlere Molmasse von etwa 2500 g/mol sowie eine LCST von 28 bis 30°C.

### Anwendungsbeispiele 1 bis 6

Ein Perlglanzpigment (Iriodin Afflair^{®} 504; Hersteller Merck KGaA, Darmstadt) wird mit den LCST-Polymeren nach den Produktvarianten (a) bis (f) belegt. Zur schnellen Untersuchung der Wirksamkeit der polymeren Belegung von Partikeln hat sich die Anwendung von plättchenförmigen Perlglanzpigmenten bewährt. Da die unmodifizierte Form sich relativ rasch in Wasser absetzt, kann die durch die Behandlung mit dem erfindungsgemäßen LCST-Polymer verbesserte Stabilität in kurzer Zeit beurteilt werden. Auch die geänderten Farbeffekte können leicht ermittelt werden.

### Anwendungsbeispiel 1

Für die Behandlung von Iriodin Afflair^{®} 504 mit dem LCST-Polymer von Beispiel 1 (Variante (a)) wird eine 0,5%-ige Polymerlösung verwendet. Das Pigment (10 Gew.-%) wird bei 800 U/min 15 min in Wasser dispergiert. Die Dispersion wird anschließend auf eine Temperatur von 0,5°C abgekühlt. Nach der Zugabe der Polymerlösung wird das Pigment bei 11°C 30 min mit dem Polymer belegt, und das ausgefällte Polymer wird dann 3 h vernetzt. Als Initiatorsystem kommen pro Gramm Polymer 0,8 g Natriumpyrosulfit, 0,4 g Eisen (II) sulfat und 0,8 g Kaliumperoxodisulfat zum Einsatz. Die Polymerkonzentration, bezogen auf Pigment, betrug 5 Gew.-%.

### Anwendungsbeispiel 2

In ähnlicher Weise erfolgt die Behandlung von Iridion Afflair® mit dem LCST-Polxymer von Beispiel 4 (Variante (b)), wobei die Temperatur der Pigmentdispersion von 0,5°C bis auf 11°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 3

In ähnlicher Weise erfolgt die Behandlung von Iriodin Afflair^{®} 504 mit dem LCST-Polymer von Beispiel 5 (Variante (c)), wobei die Temperatur der Pigmentdispersion von 0,5°C bis auf 11°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 4

In ähnlicher Weise erfolgt die Behandlung von Iriodin Afflair^{®} 504 mit dem LCST-Polymer von Beispiel 6 (Variante (d)), wobei die Temperatur der Pigmentdispersion von 10°C bis auf 50°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 5

In ähnlicher Weise erfolgt die Behandlung von Iriodin Afflair^{®} 504 mit dem LCST-Polymer von Beispiel 7 (Variante (e)), wobei die Temperatur der Pigmentdispersion von 10°C bis auf 40°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 6

In ähnlicher Weise erfolgt die Behandlung von Iriodin Afflair^{®} 504 mit dem LCST-Polymer von Beispiel 8 (Variante (f)), wobei die Temperatur der Pigmentdispersion von 10°C bis auf 48°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

### Anwendungsbeispiel 7 (Vergleich)

In ähnlicher Weise erfolgte die Behandlung von Iriodin Afflair^{®} 504 mit dem LCST-Polymer nach dem Vergleichsbeispiel, wobei die Temperatur der Pigmeritdispersion von etwa 0°C bis auf 5°C zur Belegung des Pigments erhöht wird. Die Vernetzung der Polymerschicht erfolgt unter Verwendung des Polymerisationsinitiators von Anwendungsbeispiel 1 über einen Zeitraum von 3 h.

Die Stabilisierwirkung der Pigmentbehandlung mit der LCST-Polymeren wurde nach dem Sedimentationsverhalten beurteilt, indem das Absetzverhalten der 0,5 Gew.-%-igen Pigmentdispersion in Wasser verfolgt wurde. Die Ergebnisse dieser Untersuchungen sind in den Figuren 1 und 2 dargestellt. Die Figuren 1 und 2 zeigen, dass sich sowohl das unbehandelte Pigment als auch das mit dem Vergleichspolymer behandelte Pigment nach 60 min stark abgesetzt hat, während das mit den erfindungsgemäßen LCST-Polymeren behandelte Pigment sich nur geringfügig absetzte.

Die behandelten Pigmente wurden in einen 2 K Hydroacrylmelaminlack bei einer Konzentration von 10 Gew.-%, bezogen auf den Feststoffgehalt, durch Dispergieren (Umfangsgeschwindigkeit 4 m/s, 15°C, 10 min) eingearbeitet und auf ihre Farbeigenschaften mittels eines Farbmessgeräts MA 68 Multi-Angle Spectrophotometer der Firma X-Rite untersucht. Die Ergebnisse dieser Untersuchungen sind in Tabelle I zusammengefasst.

**Tabelle I**

| Farbmessungen des behandelten Iriodin Afflair^{®} 504-Pigments in einem Hydrolack | | | | | | |
|---|---|---|---|---|---|---|
| Behandlung | 15° | | | 25° | | |
| | ΔL | Δa | Δb | ΔL | Δa | Δb |
| Bsp. 1 | 2,49 | 2,99 | 0,91 | 1,59 | 0,88 | 0,48 |
| Bsp. 2 | 2,33 | 2,72 | 0,75 | 1,47 | 0,82 | 0,41 |
| Bsp. 3 | 3,03 | 3,36 | 1,72 | 2,49 | 1,33 | 0,73 |
| Bsp. 4 | 2,99 | 3,25 | 1,67 | 2,31 | 1,12 | 0,65 |
| Bsp. 5 | 2,01 | 2,23 | 0,64 | 1,13 | 0,68 | 0;25 |
| Bsp. 6 | 2,54 | 2,89 | 1,03 | 1,64 | 0,82 | 0,58 |
| Vgl.-Bsp. 7 | 0,09 | -0,16 | 0,21 | 0,03 | -0,08 | 0,14 |

Den in Tabelle I angegebenen Werten wurde das nicht behandelte Pigment als Referenz zugrundegelegt. Der Dispergierzustand und die Orientierung der plättchenförmigen Effektpigmente kommen deutlich bei kleinen Betrachtungswinkeln zum Tragen. Es ist deutlich zu erkennen, dass die LCST-Behandlung sich positiv auf die Farbeigenschaften (Helligkeit, Farbton) des Effektpigments auswirkt. Dies kann auf den besseren Dispergierzustand und die flachere Orientierung der Pigmentteilchen zurückgeführt werden.

Die in Tabelle I angegebenen Werte für ΔL, Δa und Δb in den erfindungsgemäßen Beispielen können auf die Orientierung der Pigmentteilchen zurückgeführt werden. Das mit dem Polymer nach dem Vergleichsbeispiel behandelte Pigment zeigte dagegen niedrigere Orientierungswerte, die mit den Werten des unbehandelten Pigments vergleichbar sind.

### Anwendungsbeispiel 8

Ein Halbleiterwafer mit einer Siliciumdioxidoberfläche der Größe 1 x 1 cm wird in 3 ml destilliertem Wasser eingetaucht. Es wird auf 2°C abgekühlt und 0,2 ml einer 10 Gew.-%igen LCST-Polymerlösung von Beispiel 1 zugegeben. Nach zwei Stunden bei 2°C wird innerhalb einer Stunde auf 23°C erwärmt. Danach wird wiederum auf 2°C abgekühlt, allerdings nur für die Dauer von 10 min, und innerhalb einer Stunden auf 23°C erwärmt. Dieser Zyklus des Abkühlens und Erwärmens wird insgesamt dreimal durchgeführt.- Nach dem letzten Zyklus verbleibt der Wafer noch 24 Stunden bei 23°C im flüssigen Beschichtungsmedium und wird nachher mit destilliertem Wasser abgespült. Die Polymerschicht wird anschließend thermoinduziert vernetzt; dazu wird der Wafer in einem Trockenschrank bei Temperaturen von70 - 100°C 5 Stunden getempert. Eine andere Möglichkeit die Polymerschicht zu vernetzen, besteht darin, den beschichteten Wafer 5 Stunden mit intensivem sichtbaren Licht zu bestrahlen.

In ähnlicher Weise erfolgt die Behandlung des Siliciumwafers mit dem LCST-Polymer nach den Beispielen 4 und 5, wobei sich der Temperaturbereich der Polymerlösung im Beschichtungsprozess von 2°C bis 23°C erstreckt. Der Vernetzungsvorgang erfolgt in gleicher Weise wie beim Polymer von Beispiel 1.

In ähnlicher Weise erfolgt die Behandlung des Siliciumwafers mit den LCST-Polymeren nach den Beispielen 6 bis 8, wobei sich der Temperaturbereich der Polymerlösung im Beschichtungsprozess von 10°C bis 50°C, 10°C bis 40°C bzw. von 10°C bis 48°C erstreckt. Der Vernetzungsvorgang erfolgt in gleicher Weise wie bei dem Polymer von Beispiel 1.

Der durch das vorstehend beschriebene Verfahren mit dem LCST-Polymer beschichtete Halbleiterwafer besitzt nun eine stärker hydrophobe Oberfläche als eine Wafer ohne Beschichtung. Experimentell kann dies durch auf die Oberfläche aufgebrachte Wassertropfen dokumentiert werden. Die beschichtete und somit hydrophobere Oberfläche wird weniger gut vom Wasser benetzt als die unmodifizierte Oberfläche. Der Wassertropfen perlt von dem beschichteten Wafer ab; auf der nicht modifizierten Oberfläche breitet sich der Tropfen aus.

## Patentansprüche

1. LCST-Polymere der allgemeinen Formel 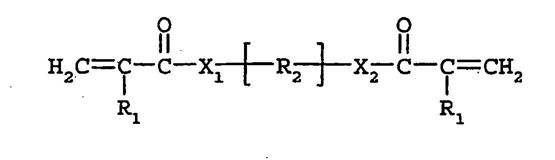 worin R₁ (gleich oder voneinander verschieden) Wasserstoff oder eine Methylgruppe, X₁ und X₂ = -O-, -S- oder NH- und X₁ zusätzlich eine Einfachbindung bedeuten, wenn das erste Atom in R₂ kein C-Atom ist, und R₂ einen der nachstehend angegebenen Reste bedeutet:
a) einen Coplymerrest (Cop), enthaltend mindestens zwei Struktureinheiten -(-O-C₂H₄)ₙ- (Ethylenoxid = EO) und -(-O-C₃H₆-)ₙ- (Propylenoxid = PO) oder -(-O-C₄H₈)ₙ- (Butylenoxid = BuO) und -(-O-CH₂-)ₙ- (Methylenoxid = MeO) im Molverhältnis 5 bis 95:95 bis 5, worin n (für jede Struktureinheit gleich oder voneinander verschieden) etwa 1 bis 1000 bedeutet;
b) 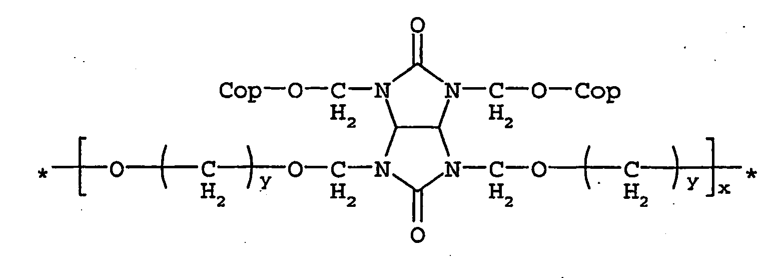 worin Cop einen Copolymerrest, wie in (a) definiert, und x = 1 bis 5 und y = 1 bis 20 bedeuten;
c) 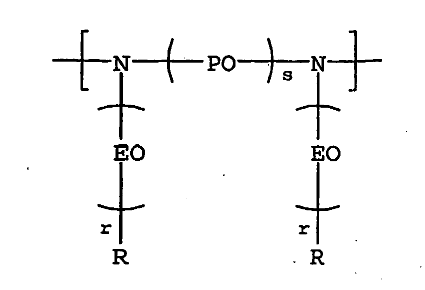 worin R eine Alkylgruppe, r = (gleich oder voneinander verschieden) 1 bis 1000 und s = 1 bis 500 bedeuten;
d) 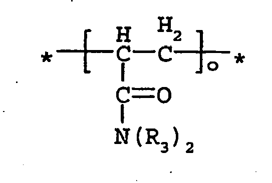 worin o = 10 bis 4000 und R₃ (gleich oder voneinander verschieden), Wasserstoff oder Alkylgruppen mit 1 bis 5 Kohlenstoffatomen bedeuten;
e) 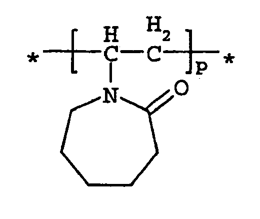 worin p = 5 bis 2000 bedeutet; oder
f) 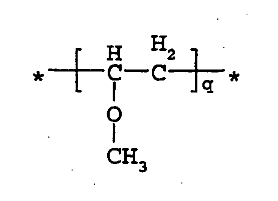 worin q = 10 bis 4000 bedeutet.

2. LCST-Polymere nach Anspruch 1, **dadurch gekennzeichnet, dass** der -(C₃H₆)- Rest in (a) und (c) einen Isopropylenrest und der Rest -(C₄H₈)- in (a) einen Isobutylenrest bedeuten.

3. LCST-Polymere nach Anspruch 1, **dadurch gekennzeichnet, dass** in (a) die Struktureinheiten -(EO)- und -(PO)- einerseits und die Struktureinheiten -(BuO)- und -(MeO)- andererseits in Blöcken mit n = 1 bis 1000 vorliegen.

4. LCST-Polymere nach Anspruch 3, **dadurch gekennzeichnet, dass** die Blöcke mit den Struktureinheiten -(PO)- bzw.-(BuO)- zwischen den Blöcken mit den Struktureinheiten-(EO)- bzw. -(MeO)- angeordnet sind.

5. Verfahren zur Herstellung der LCST-Polymeren nach einem der Ansprüche 1 bis 4 (Varianten (a) bis (c)), **dadurch gekennzeichnet, dass** man eine Verbindung der allgemeinen Formel HO-[R₂]- OH, worin R₂ die in Anspruch 1 angegebene Bedeutung hat, mit einer Verbindung der Formel 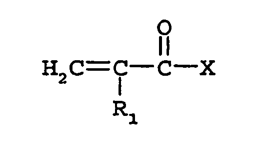 worin R₁ die in Anspruch 1 angegebene Bedeutung hat und X OH, Halogen, vorzugsweise Chlor, eine Säuregruppe, eine Acrylgruppe oder eine niedere Alkoxygruppe bedeutet, im Molverhältnis von 1:1 bis 1:4, insbesondere 1:2 umsetzt.

6. Verfahren zur Herstellung von LCST-Polymeren nach Anspruch 1 (Variante c), **dadurch gekennzeichnet, dass** man p-Toluolsulfonsäurechlorid mit einem Polyethylenoxid-Methylester der Formel H-[EO]ᵣ-OCH₃, worin r die in Anspruch 1(c) angegebene Bedeutung hat, zu einem Polyethylenoxid-Tosylat umsetzt, dieses mit (NH₂)-C₃H₆-[-PO-]ₛ-NH₂, worin s die in Anspruch 1(c) angegebene Bedeutung hat, zu H-[EO]ᵣ-NH-(PO)-NH-(EO)ᵣ-OH umsetzt und dieses mit (a) 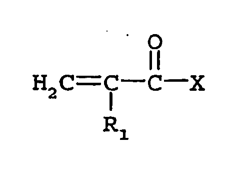 worin R₁ die in Anspruch 1 angegebene Bedeutung und X die in Anspruch 5 angegebene Bedeutung hat, oder (b) mit dem Anhydrid der entsprechenden Säure umsetzt.

7. Verwendung der LCST-Polymeren nach einem der Ansprüche 1 bis 4 bzw. hergestellt nach Anspruch 5 oder 6, zur Beschichtung von Partikeln und nicht-partikulären Substratoberflächen.

8. Verwendung nach Anspruch 7, **dadurch gekennzeichnet, dass** man die LCST-Polymeren in einem flüssigen Medium unterhalb der LCST-Temperatur mit den Partikeln bzw. den nicht partikulären Substratoberflächen kontaktiert, die Temperatur bis über die LCST-Temperatur erhöht und die Polymeren über die Doppelbindungen bei dieser oder einer höheren Temperatur auf der Oberfläche der Partikel bzw. auf den nichtpartikulären Substratoberflächen polymerisiert.

9. Partikel bzw. nicht-partikuläre Substratoberflächen, die gemäß Anspruch 8 mit den polymerisierten LCST-Polymeren beschichtet sind.

## Claims

1. LCST polymers of the general formula 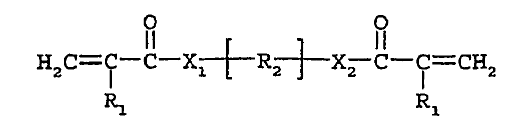 in which R₁ (identical to or different from one another) means hydrogen or a methyl group, X₁ and X₂ mean -O-, -S- or -NH- and X₁ additionally means a single bond if the first atom in R₂ is not a C atom and R₂ means one of the residues stated below:
a) a copolymer residue (Cop) containing at least two structural units -(-O-C₂H₄)ₙ- (ethylene oxide = EO) and -(-O-C₃H₆-)ₙ- (propylene oxide = PO) or -(-O-C₄H₈)ₙ- (butylene oxide = BuO) and -(-O-CH₂-)ₙ- (methylene oxide = MeO) in a molar ratio of 5-95:95-5, in which n (identical to or different from one another for each structural unit) means approx. 1 to 1000;
b) 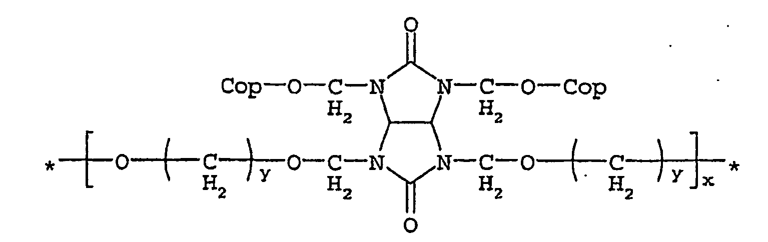 in which Cop means a copolymer residue as defined in (a) and x means 1 to 5 and y means 1 to 20;
c) 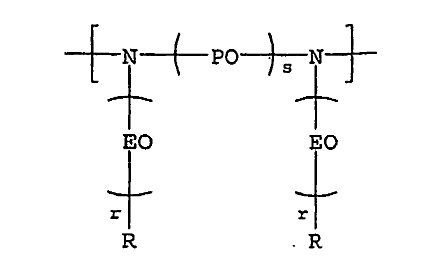 in which R means an alkyl group, r (identical to or different from one another) means 1 to 1000 and s means 1 to 500;
d) 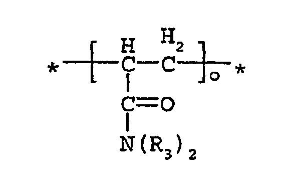 in which o = 10 to 4000 and R₃ (identical to or different from one another) means hydrogen or alkyl groups with 1 to 5 carbon atoms;
e) 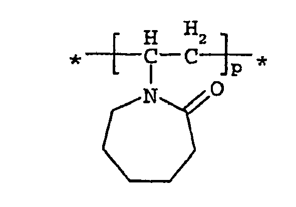 in which p means 5 to 2000; or
f) 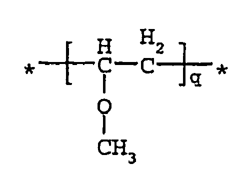 in which q means 10 to 4000.

2. LCST polymers according to claim 1, **characterised in that** the -(C₃H₆)- residue in (a) and (c) means an isopropylene residue and the residue -(C₄H₈)- in (a) means an isobutylene residue.

3. LCST polymers according to claim 1, **characterised in that** in (a) the structural units -(EO)- and -(PO)-, on the one hand, and the structural units -(BuO)- and -(MeO)-, on the other hand, are present in blocks with n = 1 to 1000.

4. LCST polymers according to claim 3, **characterised in that** the blocks with the structural units -(PO)- or -(BuO)- are arranged between the blocks with the structural units -(EO)- or -(MeO)-.

5. A method for producing the LCST polymers according to any one of claims 1 to 4 (variants (a) to (c)) , **characterised in that** a compound of the general formula HO-[R₂]-OH, in which R₂ has the meaning stated in claim 1, is reacted with a compound of the formula 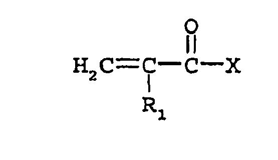 in which R₁ has the meaning stated in claim 1 and X means OH, halogen, preferably chlorine, an acid group, an acrylic group or a lower alkoxy group, in a molar ratio of 1:1 to 1:4, in particular of 1:2.

6. A method for producing LCST polymers according to claim 1 (variant c), **characterised in that** p-toluenesulfonic acid chloride is reacted with a polyethylene oxide methyl ester of the formula H-[EO]ᵣ-OCH₃, in which r has the meaning stated in claim 1(c), to yield a polyethylene oxide tosylate, the latter is reacted with (NH₂)-C₃H₆-[-PO-]ₛ-NH₂, in which s has the meaning stated in claim 1(c), to yield H-[EO]ᵣ-NH-(PO)-NH-(EO)ᵣ-OH and the latter is reacted with (a) 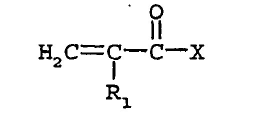 in which R₁ has the meaning stated in claim 1 and X has the meaning stated in claim 5, or (b) with the anhydride of corresponding acid.

7. Use of the LCST polymers according to any one of claims 1 to 4 or produced according to claim 5 or claim 6, for coating particles and non-particulate substrate surfaces.

8. Use according to claim 7, **characterised in that** the LCST polymers are brought into contact in a liquid medium at below the LCST temperature with the particles or the non-particulate substrate surfaces, the temperature is raised to above the LCST temperature and the polymers are polymerised via the double bonds at this or a higher temperature onto the surface of the particles or onto the non-particulate substrate surfaces.

9. Particles or non-particulate substrate surfaces which are coated according to claim 8 with the polymerised LCST polymers.

## Revendications

1. Polymères à LCST de formule générale 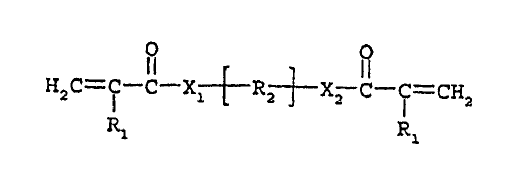 où les R₁ (identiques ou différents les uns des autres) représentent un hydrogène ou un groupe méthyle, X₁ et X₂ = -O-, -S- ou -NH-, et X₁ une liaison simple supplémentaire lorsque le premier atome dans R₂ n'est pas un atome de C, et R₂ représente un des restes cités ci-après :
a) un reste copolymère (Cop), comprenant au moins deux unités structurelles -(-O-C₂H₄)n- (oxyde d'éthylène = EO) et -(-O-C₃H₆-)n- (oxyde de propylène = PO) ou -(-O-C₄H₈)n- (oxyde de butylène = BuO) et -(-O-CH₂-)ₙ- (oxyde de méthylène = MeO) dans des rapports molaires de 5 à 95:95 à 5, où les n (identiques ou différents les uns des autres pour chaque unité structurelle) sont d'environ 1 à 1000 ;
b) 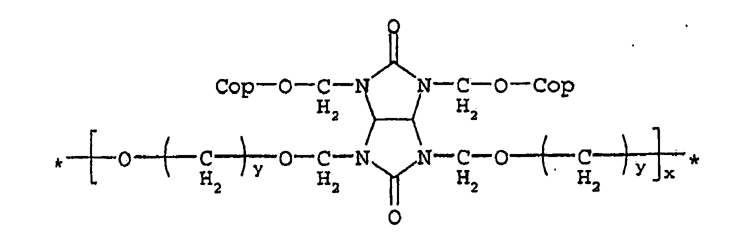 où Cop représente un reste copolymère tel que défini en (a), et x = 1 à 5 et y = 1 à 20 ;
c) 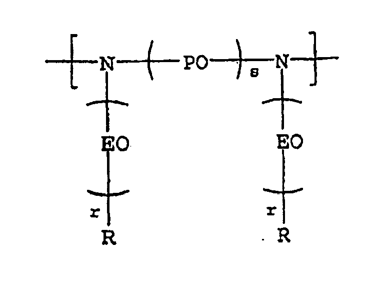 où R représente un groupe alkyle, les r = (identiques ou différents les uns des autres) 1 à 1000 et s = 1 à 500 ;
d) 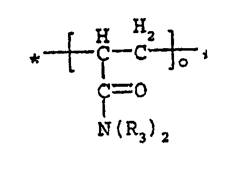 où o = 10 à 4000 et les R₃ (identiques ou différents les uns des autres) représentent un hydrogène ou des groupes alkyles avec 1 à 5 atomes de carbone ;
e) 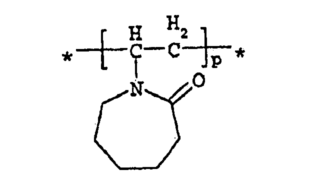 où p = 5 à 2000 ; ou
f) 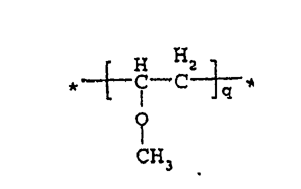 où q = 10 à 4000.

2. Polymères à LCST selon la revendication 1, **caractérisés en ce que** le reste -(C₃H₆) - dans (a) et (c) représente un résidu isopropylène et le résidu -(C₄H₈) - en (a) est un résidu isobutylène.

3. Polymères à LCST selon la revendication 1, **caractérisés en ce que** les unités structurelles -(EO)- et -(PO)- d'une part, et les unités structurelles
- (BuO)- et -(MeO)- d'autre part, sont présentes dans (a) en blocs avec n = 1 à 1000.

4. Polymères à LCST selon la revendication 3, **caractérisés en ce que** les blocs avec les unités structurelles -(PO)-, respectivement -(Bu0)-, sont agencés entre les blocs avec les unités structurelles - (EO)-, respectivement - (MeO) -

5. Procédé pour la fabrication de polymères à LCST selon l'une des revendications de 1 à 4 (variantes (a) à (c)), **caractérisé en ce que** l'on fait réagir un composé de formule générale HO-[R₂]-OH, où R₂ représente ce qui est indiqué à la revendication 1, avec un composé de formule 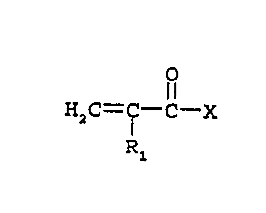 où R₁ représente ce qui est indiqué à la revendication 1 et X représente OH, un halogène, de préférence un chlore, un groupe acide, un groupe acrylique ou un groupe alcoxy inférieur, dans des rapports molaires de 1:1 à 1:4, en particulier 1:2.

6. Procédé pour la fabrication de polymères à LCST selon la revendication 1 (variante c), **caractérisé en ce que** l'on fait réagir du chlorure d'acide p-toluènesulfonique avec un ester méthylique d'oxyde de polyéthylène de formule H-[EO]ᵣ-OCH₃, où r représente ce qui est indiqué à la revendication 1 (c), pour donner du tosylate d'oxyde de polyéthylène, que l'on fait réagir avec (NH₂)-C₃H₆-[-PO-]ₛ-NH₂, où s représente ce qui est indiqué à la revendication 1 (c), pour donner H-[EO]ᵣ-NH-(PO)-NH-(EO)ᵣ-OH, et que celui-ci est mis à réagir avec (a) 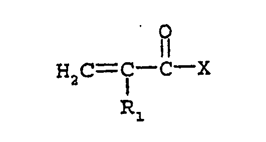 où R₁ représente ce qui est indiqué à la revendication 1 et X ce qui est indiqué à la revendication 5, ou (b) avec l'anhydride de l'acide correspondant.

7. Utilisation des polymères à LCST selon l'une quelconque des revendications 1 à 4 respectivement, fabriqués selon la revendication 5 ou 6, destinée au revêtement de particules et de surfaces de substrats non particulaires.

8. Utilisation selon la revendication 7,
**caractérisée en ce que** l'on met en contact les polymères à LCST avec les particules, respectivement les surfaces de substrats non particulaires, dans un milieu liquide en dessous de la température LCST, que l'on élève la température jusqu'au-dessus de la température LCST et que l'on polymérise les polymères par l'intermédiaire des doubles liaisons sur la surface des particules, respectivement sur les surfaces de substrats non particulaires, à cette température ou à une température plus élevée.

9. Particules, respectivement surfaces de substrats non particulaires, qui sont revêtues des polymères à LCST polymérisés selon la revendication 8.
